## Europäisches Patentamt

## European Patent Office

## Office européen des brevets

(19)

(11) Veröffentlichungsnummer: **0 090 211**
**B1**

(12)  j     **EUROPÄISCHE PATENTSCHRIFT**

(45) Veröffentlichungstag der Patentschrift:
**17.09.86**

(21) Anmeldenummer: **83102253.8**

(22) Anmeldetag: **08.03.83**

(51) Int. Cl.⁴: **H 04 N  5/21**, G 09 B  1/16

(54) **Gerät zur flimmerfreien Wiedergabe von Fernsehbildern und Text- und Graphikseiten.**

(30) Priorität: **18.03.82  DE 3209876**

(43) Veröffentlichungstag der Anmeldung:
**05.10.83 Patentblatt 83/40**

(45) Bekanntmachung des Hinweises auf die Patenterteilung:
**17.09.86 Patentblatt 86/38**

(84) Benannte Vertragsstaaten:
**AT BE CH DE FR GB IT LI NL SE**

(56) Entgegenhaltungen:
**DE - A - 2 623 588**
**DE - A - 2 840 893**
**DE - A - 2 915 359**
**GB - A - 2 050 109**
**US - A - 4 016 544**

(73) Patentinhaber: **International Standard Electric Corporation, 320 Park Avenue, New York New York 10022 (US)**

(84) Benannte Vertragsstaaten: **BE CH FR GB IT LI NL SE AT**

(73) Patentinhaber: **Standard Elektrik Lorenz Aktiengesellschaft, Hellmuth-Hirth-Strasse 42, D-7000 Stuttgart 40 (DE)**

(84) Benannte Vertragsstaaten: **DE**

(72) Erfinder: **Mitschke, Helmut, Obere Breitstrasse 8, D-7535 Königsbach-Stein 1 (DE)**

(74) Vertreter: **Pohl, Heribert, Dipl.-Ing et al, Standard Elektrik Lorenz AG Patent- und Lizenzwesen Kurze Strasse 8 Postfach 300 929, D-7000 Stuttgart 30 (DE)**

## Beschreibung

Die Erfindung betrifft ein Fernsehwiedergabegerät mit einem einen digitalen Bildspeicher enthaltenden Normwandler, bei dem das mit vom Sender gegebener Bild- und Zeilenfrequenz empfangene Videosignal des Fernsehbildes abgetastet, die Abtastwerte in digitale Datensätze gewandelt, mit einer ersten, der Einschreibfrequenz, in den Bildspeicher eingeschrieben, mit einer zweiten, der Auslesefrequenz, welche ein Vielfaches der Einschreibfrequenz darstellt, aus dem Bildspeicher ausgelesen, analogisiert und mit höherer Bild- und Zeilenfrequenz auf dem Bildschirm dargestellt wird. Durch diese Normwandlung wird ein praktisch flimmerfreies Bild erreicht.

Es ist, z.B. aus der De-A1 2 915 359, bekannt, dass durch Erhöhen der Bildwiedergabefrequenz – wie auch durch Verzicht auf den Zeilensprung – ein flimmerfreies Bild erreicht werden kann. Dazu wird das empfangene Fernsehbild in digitaler Form gespeichert und mit höherer Geschwindigkeit – oder in anderer Reihenfolge – aus dem Speicher ausgelesen.

Auch bei der Wiedergabe von Text- und Graphikseiten, kurz Textseiten (etwa bei Bildschirmtext oder Videotext), macht sich das Flimmern des Bildes störend bemerkbar. Das durch das Zeilensprungverfahren bedingte Flimmern wird bei Bildschirmtext dadurch beseitigt, dass die Zeilen des zweiten Halbbilds mit denen des ersten zur Deckung gebracht werden. Dies ergibt aber sehr grobe Darstellungen (DE-B1 2 949 020). Es liegt nun nahe, bei Fernsehgeräten, die einen Normwandler zur flimmerfreien Wiedergabe des Fernsehbildes enthalten, nicht das Fernsehbild allein normzuwandeln, sondern die Einblendung der Textseite und die ganze oder teilweise Ausblendung des Fernsehbildes schon vor dem Normwandler durchzuführen. Eine Schaltungsanordnung zum Einblenden von Zeichen oder Ziffern und zum teilweisen Ausblenden des Fernsehbildes ist zum Beispiel aus der DE-B2 2 618 563 bekannt. In diesem Fall ist jedoch ein anderer Normwandler erforderlich, der für eine höhere Bandbreite ausgelegt sein muss und damit einen grösseren (und schnelleren) Speicher benötigt. Fernsehbild und Textseite unterscheiden sich nämlich stark hinsichtlich ihrer technischen Daten:

Beim Fernsehbild muss jede Farbe und jede Helligkeitsstufe darstellbar sein. Bei einer Textseite beschränkt man sich auf wenige Farben und pro Farbe auf nur eine Helligkeitsstufe. Sie muss jedoch viel feinere Strukturen erkennen lassen als das Fernsehbild. Sie muss deshalb mit grösserer Bandbreite verarbeitet werden.

Die beiden Fälle unterscheiden sich also dadurch, dass im einen Fall (beim Fernsehbild) sehr umfangreiche, aber weniger häufig anfallende Datensätze zu verarbeiten sind, im andern (bei der Textseite) dagegen weniger umfangreiche, dafür aber häufigere anfallende Datensätze.

Beispiele für den inneren Aufbau eines digitalen Bildspeichers, wie er in einem erfindungsgemässen Fernsehwiedergabegerät vorausgesetzt wird, sind bekannt. In der bereits genannten DE-A1 2 915 359 wird ein Bildspeicher vorgestellt, der aus einzelnen Zeilenspeichern besteht. Die DE-A1 2 725 362 zeigt u.a. eine Möglichkeit auf, langsamere Speicher anstelle von schnellen Speichern einzusetzen (Figur 3 mit zugehöriger Beschreibung auf den Seiten 5 und 6).

Der Erfindung liegt die Aufgabe zugrunde, den unterschiedlichen Anforderungen bei der Normwandlung von Fernsehbild und Textseite zu genügen, ohne deshalb den zur Normwandlung des Fernsehbildes erforderlichen Speicher vergrössern zu müssen.

Diese Aufgabe wird erfindungsgemäss dadurch gelöst,

– dass dem Normwandler ein Textseitendecoder für die Auswahl und Darstellung von Text- und Graphikseiten vorgeschaltet ist, der zumindest Farbartsignale und ein Austastsignal bildet,

– dass vor dem Bildspeicher ein erster Multiplexer eingefügt ist, der es erlaubt, wahlweise anstelle mindestens eines Teils der Datensätze für das Fernsehbild die digitalen Farbartsignale für die Text- und Graphikseiten zu speichern,

– dass nach dem Bildspeicher ein Demultiplexer eingefügt ist, der die aus dem Bildspeicher ausgelesenen Datensätze wieder in Textseiten- und Fernsehbildsignale trennt,

– dass die Umschaltung des Multiplexers und des Demultiplexers sowie das Dunkeltasten des jeweils nicht darzustellenden Bildes oder Bildteils durch das Austastsignal bzw. ein davon abgeleitetes Abtastsignal erfolgt,

– und dass an der Eingangsseite des Normwandlers ein weiterer Demultiplexer mit Zwischenspeicher und an der Ausgangsseite des Normwandlers ein weiterer Multiplexer in den Weg des Textseitensignals eingefügt sind, wobei der weitere Demultiplexer drei Eingänge für die drei Farbartsignale der Textseite aufweist, wobei jeder der drei Eingänge in zyklischem Wechsel mit den Eingängen von n Speicherzellen des Zwischenspeichers verbunden wird und wobei alle 3n Ausgänge des Zwischenspeichers über den ersten Multiplexer an den Eingang des Bildspeichers schaltbar sind, so dass jeweils n aufeinanderfolgende Sätze von je drei zusammengehörigen Farbartsignalen der Textseite gleichzeitig in den Bildspeicher eingeschrieben und wieder gleichzeitig aus diesem ausgelesen werden.

Das Fernsehbild ist bei einer Bandbreite von 4,5 MHz ausreichend aufgelöst, bei Textseiten sind etwa 6 ... 7 MHz erforderlich; für n = 2 erhält man eine ausreichende Bandbreite von 9 MHz.

Manche Textseitenübertragungsverfahren, etwa Videotext, sind auch für Einblendungen in das laufende Programm geeignet. Dazu wird nur ein Teil des Fernsehbildes durch das Austastsignal dunkelgetastet und durch ein Textseitenteil ersetzt. Das Austastsignal muss dann in gleicher Weise wie der Bildinhalt normgewandelt werden. Dies erreicht man dadurch, dass das Austastsignal mitgespeichert wird und dass das am Ausgang des Bildspeichers wiedergewonnene Austastsignal zur Umschaltung des Demultiplexers und zum Dunkeltasten des jeweils nicht darzustellenden Bildteils verwendet wird.

Im folgenden wird die Erfindung anhand eines Ausführungsbeispiels unter Zuhilfenahme der beiliegenden Zeichnung weiter erläutert.

Fig. 1 zeigt als Ausführungsbeispiel das Blockschaltbild eines erfindungsgemässen Fernsehwiedergabegerätes.

Fig. 2 zeigt als Ausführungsbeispiel ein detaillierteres Blockschaltbild für den Normwandler 20 entsprechend Fig. 1.

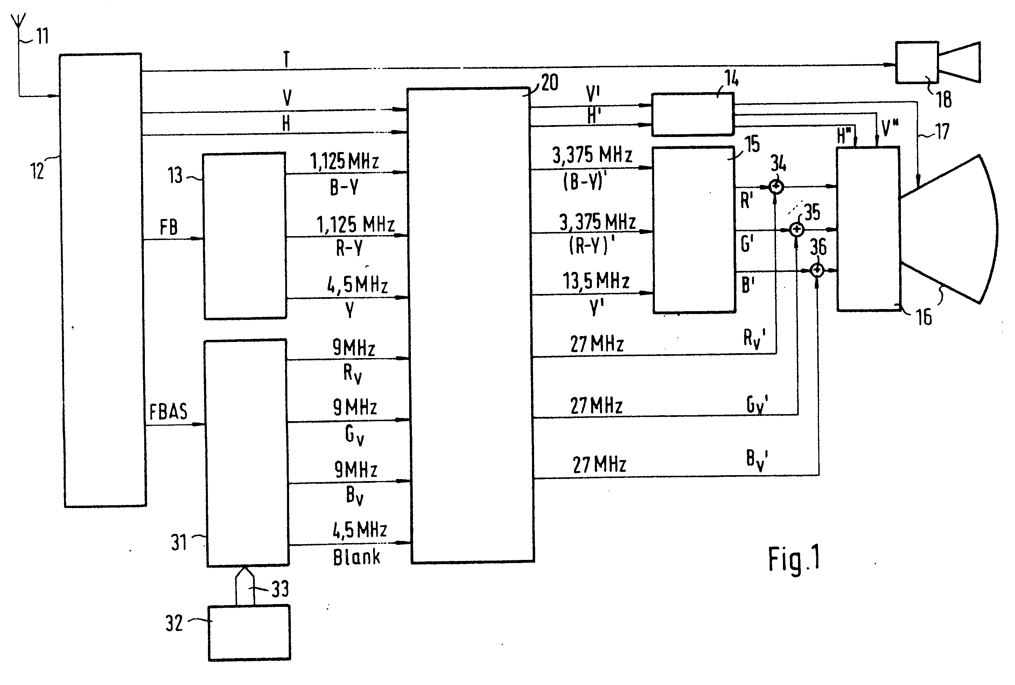

Behält man in Fig. 1 nur die Baugruppen 11 ... 18 bei, so bleibt ein Standard-Farbfernsehempfänger übrig, dessen Ausführungsmöglichkeiten in allen Einzelheiten bekannt sind.

Der Signalweg ist dabei der folgende:

Das von einer Signalquelle, etwa von einer Antenne 11, kommende Fernsehsignal wird in einem Eingangsteil 12 und einem Farbdekoder 13 in ein Tonsignal T, Vertikal- und Horizontalimpulse V bzw. H, ein Leuchtdichtesignal Y und die Farbdifferenzsignale R–Y bzw. B–Y aufgetrennt. In einer Farbmatrix 15 werden aus Leuchtdichtesignal und Farbdifferenzsignalen die Farbartsignale gebildet, mit denen eine Farbbildröhre 16 gesteuert wird. In einer Ablenkschaltung 14 werden aus den Vertikal- und Horizontalimpulsen die Vertikal- und Horizontalablenkspannungen $V''$ und $H''$ sowie die Hochspannung 17 für die Farbbildröhre 16 gewonnen. Ein Tonteil 18 gibt das Tonsignal T wieder.

Um ein flimmerfreies Fernsehbild zu erreichen, ist der Normwandler 20 eingefügt. Dieser wandelt die mit Zeilensprung und mit einer Vollbildfolgefrequenz von 25 Hz empfangenen Fernsehbilder in solche ohne Zeilensprung und mit einer Vollbildfolgefrequenz von 75 Hz um. Der Normwandler kann, wenn die aus den Baugruppen 31 ... 36 bestehende Videotext- oder eine sonstige Textseiteneinrichtung fehlt, so aufgebaut sein wie in Fig. 4 der DE-A1 2 915 359 mit zugehöriger Beschreibung.

Zur Wiedergabe von Textseiten wird nun ein Textseitendekoder 31 eingefügt, der z.B. bei Videotext das gesamte Videosignal FBAS benötigt, während der Farbdekoder 13 nur den Bildinhalt FB verarbeitet. Ein Bedienteil 32 ist mit dem Textseitendekoder 31 durch einen übertragungskanal 33 verbunden, der in bekannter Weise auch mit Infrarot oder Ultraschall arbeiten kann.

Für andere Textseitenübertragungsverfahren, etwa für Bildschirmtext, sind die hier dargestellten Baugruppen 31 ... 33 entsprechend abzuändern. Das Austastsignal Blank kann gegebenenfalls einfach vom Fernsehbild-Textseiten-Umschalter erzeugt werden, der zum Bedienteil 32 gehört.

Um eine ausreichende Auflösung sicherzustellen, sind für die einzelnen Signale gewisse Mindestbandbreiten erforderlich. Im Beispiel sind, auch im Hinblick auf die weitere Verarbeitung, folgende Bandbreiten gewählt (jeweils mit 0 Hz als unterer Bandgrenze):

- für das Leuchtdichtesignal Y 4,5 MHz,
- für die Farbdifferenzsignale R–Y und B–Y je 1,125 MHz,
- für die vom Textseitendekoder gelieferten Farbartsignale $R_v$, $G_v$, $B_v$ je 9 MHz,
- für das Austastsignal Blank 4,5 MHz.

Wird von 25 Vollbildern pro Sekunde auf 75 Vollbilder pro Sekunde gewandelt, dann weisen die gewandelten Signale $Y'$, $(R–Y)'$, $(B–Y)'$, $R_v'$, $G_v'$, $B_v'$ und Blank' je die dreifache Bandbreite gegenüber den ursprünglichen Signalen auf.

Die Horizontal- und Vertikalimpulse H bzw. V sind gegeben. Die Wiederholfrequenz von $H'$ ist das Dreifache der von H, die Wiederholfrequenz von $V'$ wegen des Verzichts auf den Zeilensprung nur das Eineinhalbfache der von V.

Die normgewandelten Farbartsignale der Textseite, $R_v'$, $G_v'$, $B_v'$ und die als Ausgangssignale der Farbmatrix 15 erhaltenen Farbartsignale des Fernsehbilds $R'$, $G'$, $B'$ werden in Addierern 34, 35 und 36 zusammengefasst und der Farbbildröhre 16 zugeführt. Die Videoendstufen, die hier Frequenzen bis 27 MHz verarbeiten müssen, sind nicht gesondert gezeichnet.

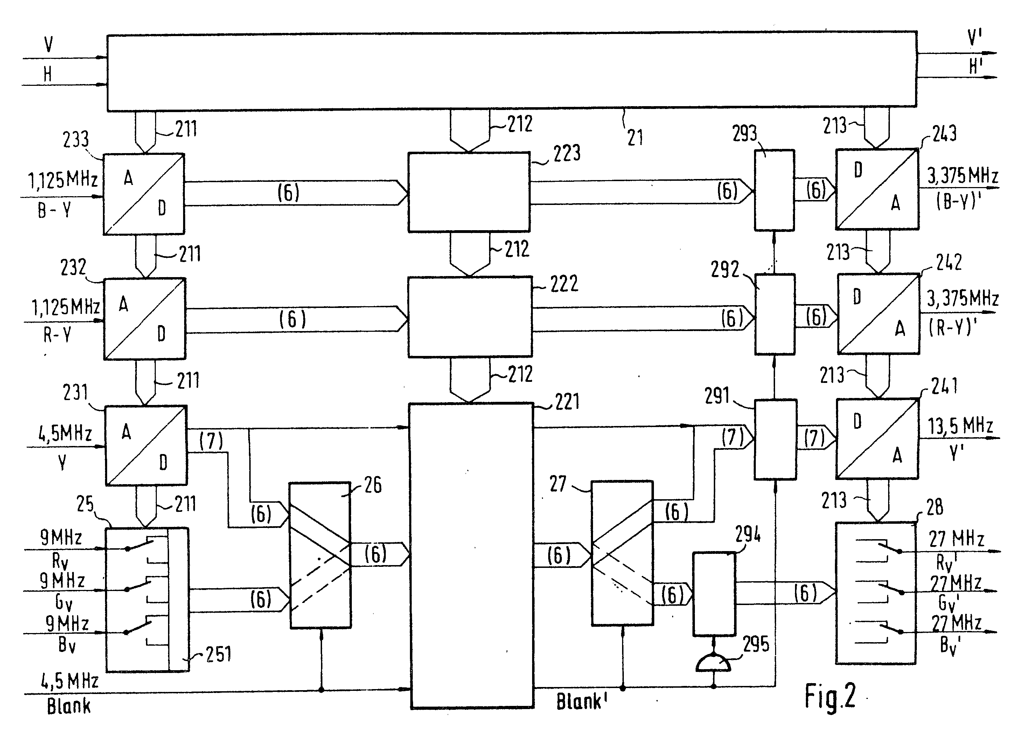

Die Funktion des Normwandlers 20 wird anhand der Fig. 2 beschrieben. Die Steuereinheit 21 steuert über Steuerleitungen, bestehend aus den Gruppen 211, 212 und 213, den gesamten Wandlungsvorgang; sie wird synchronisiert durch Vertikal- und Horizontalimpulse V und H und bildet daraus die gewandelten Impulse $V'$ und $H'$.

Leuchtdichtesignal und Farbdifferenzsignale werden in bekannter Weise je für sich in Analog-Digital-Wandlern 231–233 digitalisiert, in digitalen Bildspeichern 221–223 zwischengespeichert und nach dem Auslesen in Digital-Analog-Wandlern 241–243 wieder in Analogsignale gewandelt. Im Beispiel werden die Farbdifferenzsignale je durch 6stellige Binärzahlen dargestellt, dass Leuchtdichtesignal durch 7stellige Binärzahlen.

Die Farbartsignale oder Textseite, $R_v$, $G_v$ und $B_v$, werden in einem Demultiplexer 25 mit nachfolgendem Zwischenspeicher 251 von einem Datenstrom aus 3-bit-Binärwörtern mit 9 MHz in einen Datenstrom aus 6-bit-Binärwörtern mit 4,5 MHz gewandelt. Dieser Datenstrom hat damit dieselben Eigenschaften wie beliebige 6 der 7 Stellen des digitalisierten Leuchtdichtesignals. Da nur entweder Textseite oder Fernsehbild darzustellen sind, wird in einem Multiplexer 26 derart umgeschaltet, dass entweder die 6 Ausgänge des Zwischenspeichers 251 oder 6 der 7 Ausgänge des Analog-Digital-Wandlers 231 an den Eingang des Bildspeichers 221 angeschaltet werden. Der siebte Ausgang des Wandlers 231 bleibt ständig angeschaltet.

Die Umschaltung des Multiplexers 26 erfolgt durch das Austastsignal Blank.

Am Ausgang des Bildspeichers 221 ist wieder eine Auftrennung der Datenströme in solche für Fernsehbild und solche für Textseite erforderlich.

Dies wird im Demultiplexer 27 erreicht, der durch ein weiteres Austastsignal Blank' umgeschaltet wird. Im einfachsten Fall sind beide Austastsignale identisch und zeitlich konstant und werden vom Bediener am Fernsehbild-Textseiten-Umschalter im Bedienteil 32 eingestellt.

Bei Texteinblendungen ins Fernsehbild werden jedoch nur Teile des Bildes umgeschaltet. Hier ist das Austastsignal Blank im Bildspeicher 221 mitzuspeichern und mit dem zugehörigen Teil der Bildinformation als Austastsignal Blank' wiederzugewinnen.

In einem Multiplexer 28 werden aus jeweils sechs gleichzeitig ankommenden Farbartsignalwerten wieder die ursprünglichen (am Demultiplexer 25 ankommenden) zwei aufeinanderfolgenden Gruppen von je drei Farbartsignalwerten gebildet; sie treffen jetzt jedoch dreimal so schnell hintereinander ein. Eine gesonderte Analogisierstufe kann hier, wie am Eingang die Digitalisierstufe, entfallen, da bei Textseiten die Analogsignale je nur zwei Werte annehmen können und damit Analog- und Digitalsignal identisch sind.

Da zwischen den Farbartsignalen von Fernsehbild und Textseite nicht mehr umgeschaltet wird, sondern diese nur jeweils in den Addierern 34–36 (Fig. 1) addiert werden, muss jeweils eine der beiden Farbartsignalgruppen R', G', B' bzw. $R_v'$, $G_v'$, $B_v'$ die Werte Null aufweisen. Dazu werden die Schwarzwerteinfügungen 291 ... 294 verwendet, die jeweils digital den Wert Null einstellen. Die Schwarzwerteinfügungen können teils in den Wandlern 241–243 enthalten sein und über die Rücksetzeingänge aktiviert werden, sie können auch teils Bestandteil des Demultiplexers 27 sein, wobei dann die nicht durchgeschalteten Ausgänge auf Null liegen. Im letzten Fall ist eine getrennte Ansteuerung nicht erforderlich, ansonsten muss diese durch das Austastsignal Blank' für das Fernsehbild bzw. das in einem Inverter 295 daraus gebildete Inverssignal für die Textseite geschehen.

**Patentansprüche**

1. Fernsehwiedergabegerät mit einem einen digitalen Bildspeicher enthaltenden Normwandler, bei dem das mit vom Sender gegebener Bild- und Zeilenfrequenz empfangene Videosignal des Fernsehbildes abgetastet, die Abtastwerte in digitale Datensätze gewandelt, mit einer ersten, der Einschreibfrequenz, in den Bildspeicher eingeschrieben, mit einer zweiten, der Auslesefrequenz, welche ein Vielfaches der Einschreibfrequenz darstellt, aus dem Bildspeicher ausgelesen, analogisiert und mit höherer Bild- und Zeilenfrequenz auf dem Bildschirm dargestellt wird, dadurch gekennzeichnet,
  – dass dem Normwandler (20) ein Textseitendecoder (31) für die Auswahl und Darstellung von Text- und Graphikseiten vorgeschaltet ist, der zumindest Farbartsignale ($R_v$, $G_v$, $B_v$) und ein Austastsignal (Blank) bildet,
  – dass vor dem Bildspeicher (221, 222, 223) ein erster Multiplexer (26) eingefügt ist, der es erlaubt, wahlweise anstelle mindestens eines Teils der Datensätze für das Fernsehbild die digitalen Farbartsignale für die Text- und Graphikseiten zu speichern,
  – dass nach dem Bildspeicher (221, 222, 223) ein Demultiplexer (27) eingefügt ist, der die aus dem Bildspeicher (221, 222, 223) ausgelesenen Datensätze wieder in Textseiten- und Fernsehbildsignale trennt,
  – dass die Umschaltung des Multiplexers (26) und des Demultiplexers (27) sowie das Dunkeltasten des jeweils nicht darzustellenden Bildes oder Bildteils durch das Austastsignal (Blank) bzw. ein davon abgeleitetes Abtastsignal (Blank') erfolgt,
  – und dass an der Eingangsseite des Normwandlers (20) ein weiterer Demultiplexer (25) mit Zwischenspeicher (251) und an der Ausgangsseite des Normwandlers (20) ein weiterer Multiplexer (28) in den Weg des Textseitensignals eingefügt sind, wobei der weitere Demultiplexer (25) drei Eingänge für die drei Farbartsignale der Textseite aufweist, wobei jeder der drei Eingänge in zyklischem Wechsel mit den Eingängen von n Speicherzellen des Zwischenspeichers (251) verbunden wird und wobei alle 3n Ausgänge des Zwischenspeichers über den ersten Multiplexer (26) an den Eingang des Bildspeichers (221, 222, 223) schaltbar sind, so dass jeweils n aufeinanderfolgende Sätze von je drei zusammengehörigen Farbartsignalen der Textseite gleichzeitig in den Bildspeicher (221, 222, 223) eingeschrieben und wieder gleichzeitig aus diesem ausgelesen werden.

2. Fernsehwiedergabegerät nach Anspruch 1, dadurch gekennzeichnet, dass der Bildspeicher (221, 222, 223) Speicherzellen enthält, in denen das Austastsignal (Blank) speicherbar ist, so dass das am Ausgang des Bildspeichers wiedergewonnene und damit entsprechend dem Bildinhalt gewandelte Austastsignal (Blank') zur Umschaltung des Demultiplexers (27) und zum Dunkeltasten des jeweils nicht darzustellenden Bildteils verfügbar ist.

**Claims**

1. Television picture reproducer with a standard converter containing a digital frame store, wherein the video signal received from the transmitter at a given field and line frequency is sampled, and wherein the sample values are converted into digital data units, written into the frame store at a first frequency, the write frequency, read out of the frame store at a second frequency, the read frequency, which is a multiple of the write frequency, returned to analog form and reproduced on the screen at a higher field and line frequency, characterised in
  – that the standard converter (20) is preceded by a text-page decoder (31) for the selection and display of text and graphics pages which forms at least colour signals ($R_v$, $G_v$, $B_v$) and a blanking signal (Blank),

– that the frame store (221, 222, 223) is preceded by a first multiplexer (26) which permits the digital colour signals for the text and graphics pages to be stored optionally instead of at least part of the data units for the television picture,

– that, after the frame store (221, 222, 223), there is inserted a demultiplexer (27) which separates the data units read from the frame store (221, 222, 223) into text-page and television picture signals again,

– that the switching-over of the multiplexer (26) and the demultiplexer (27) as well as the blanking of the respective picture or picture section not to be displayed is effected by the original blanking signal (Blank) or a blanking signal (Blank') derived from it,

– and that an additional demultiplexer (25) with a buffer (251) and an additional multiplexer (28) are inserted in the path of the text-page signal at the input end and the output end of the standard converter (20) respectively, the additional demultiplexer having three inputs for the three colour signals of the text page, each of the three inputs being connected in cyclical alternation to the inputs of n storage cells of the buffer (251) and all 3n outputs of the buffer being switchable via the first multiplexer (26) to the input of the frame store (221, 222, 223) so that in each case n successive sets of three colour signals of the text page which belong together are simultaneously written into the frame store (221, 222, 223) and simultaneously read out again from it.

2. A television picture reproducer as claimed in Claim 1, characterised in that the frame store (221, 222, 223) contains storage cells in which the blanking signal (Blank) can be stored, so that the blanking signal (Blank') recovered at the output of the frame store and thus corresponding to the picture content is available for switching over the demultiplexer (27) and for blanking the respective picture section not to be displayed.

## Revendications

1. Dispositif de reproduction d'images de télévision dont le convertisseur de normes comporte une mémoire numérique d'image, dans lequel le signal vidéo reçu d'un émetteur, à une fréquence de ligne et de trame donnée, est échantillonné, les valeurs d'échantillon sont converties en mots de données numériques, écrites dans la mémoire d'image à une première fréquence, la fréquence d'écriture, lues dans la mémoire d'image à une seconde fréquence, la fréquence de lecture, qui est un multiple de la fréquence d'écriture, reconverties sous forme analogique, et reproduites sur l'écran à une fréquence de ligne et de trame plus élevée, caractérisé

– en ce que le convertisseur de normes (20) comporte un décodeur de page de texte (31) qui sélectionne et affiche des pages de texte ou de dessin, et qui forme au moins des signaux de couleur ($R_v$, $G_v$, $B_v$) et un signal de suppression (Blank),

– en ce que la mémoire d'image (221, 222, 223) est précédée d'un multiplexeur (26) qui permet aux signaux numériques de couleur pour les pages de texte ou de dessin d'être mémorisés à la place d'une partie des mots de données de l'image de télévision,

– en ce que la mémoire d'image (221, 222, 223) est suivie d'un démultiplexeur (27) grâce auquel les mots de données lus dans la mémoire d'image sont triés en signaux de pages de texte et en signaux d'image de télévision,

– en ce que la commutation du multiplexeur (26) et du démultiplexeur (27) ainsi que la suppression de l'image, ou de la portion d'image, correspondante ne devant pas être affichée est provoquée par le signal de suppression (Blank) ou par un signal de suppression qui en est dérivé (Blank')

– et en ce que, sur le trajet des signaux de page de texte, un démultiplexeur supplémentaire (25) à mémoire tampon (25') est monté du côté de l'entrée du convertisseur de normes (20) et un multiplexeur supplémentaire (28) est monté du côté de la sortie du convertisseur de normes (20), le démultiplexeur supplémentaire (25) comportant trois entrées pour les trois signaux de couleur, chacune des trois entrées étant reliées alternativement avec l'une des n cellules de mémoire de la mémoire tampon, toutes les 3n sorties de la mémoire tampon pouvant être reliées à l'entrée de la mémoire d'image (221, 222, 223) au moyen du premier multiplexeur (26), de façon que n groupes successifs de mots de chacun trois signaux de couleur de pages de texte puissent être écrits simultanément dans la mémoire d'image (221, 222, 223) et puissent être à nouveau lus simultanément.

2. Dispositif de reproduction d'images de télévision selon la revendication 1, caractérisé en ce que la mémoire d'image (221, 222, 223) comporte des cellules de mémoires dans lesquelles le signal de suppression (Blank) est mémorisé de façon que le signal de suppression récupéré à la sortie de la mémoire d'image et ainsi converti en fonction du contenu de l'image, soit disponible pour commuter le démultiplexeur (27) et pour supprimer la portion de l'image ne devant pas être affichée.

Fig.1

Fig.2